# EUROPÄISCHE PATENTSCHRIFT

(11) **EP 1 000 391 B1**
(45) Veröffentlichungstag und Bekanntmachung des Hinweises auf die Patenterteilung: **21.11.2001**
(21) Anmeldenummer: 98942586.3
(22) Anmeldetag: 21.07.1998
(51) Int. Cl.: G05G 1/14, B60K 26/02

(54) **FAHRPEDAL**
GAS PEDAL
PEDALE D'ACCELERATEUR

(30) Priorität: 28.07.1997 DE 19732340
(43) Veröffentlichungstag der Anmeldung: 17.05.2000
(73) Patentinhaber: Mannesmann VDO Aktiengesellschaft, 60388 Frankfurt am Main (DE)
(72) Erfinder: MANN, Thomas, D-61130 Nidderau (DE); SEVERIEN, Herbert, D-65824 Schwalbach (DE)
(74) Vertreter: Klein, Thomas, Dipl.-Ing. (FH)
(86) Internationale Anmeldenummer: EP9804554
(87) Internationale Veröffentlichungsnummer: WO9905582

(56) Entgegenhaltungen:
- DE-A- 4 426 549
- DE-A- 19 536 605
- US-A- 4 976 166

## Beschreibung

Die Erfindung betrifft ein Fahrpedal mit einem von einem Halteteil gehaltenen Pedalarm, welcher durch eine Betätigungskraft auslenkbar und von einer ein Federelement aufweisenden Rückstelleinrichtung in eine Grundstellung zurück schwenkbar ist, mit einem Sollwertgeber zur Erzeugung eines abhängig von der Stellung des Pedalarms veränderlichen elektrischen Signals und mit einem Dämpfungsglied zum Erzeugen einer Dämpfung bei der Bewegung des Pedalarms.

Solche Fahrpedale werden in heutigen Kraftfahrzeugen häufig eingesetzt und sind damit bekannt. Dabei ist der Pedalarm an einem an dem Halteteil angeordneten Gelenk befestigt und wird von zwei spiralförmigen oder schraubenförmigen Rückstellfedern als Federelement der Rückstelleinrichtung in der Grundstellung vorgespannt. Das Dämpfungsglied hat in der Regel einen Reibklotz, der gegen einen Reibbelag vorgespannt ist. Bei einem Niederdrücken des Pedalarms gleitet der Reibklotz über den Reibbelag und verhindert damit, daß kleinere Bewegungen ungedämpft auf den Sollwertgeber übertragen werden. Beim Niederdrücken des Pedalarms soll das Dämpfungsglied einen größeren Widerstand als beim Loslassen des Pedalarms erzeugen. Hierdurch hat das Dämpfungsglied eine Hysterese, die ein sicheres Zurückschwenken des Pedalarms in die Grundstellung ermöglicht. Ein solches Dämpfungsglied ist jedoch sehr aufwendig zu fertigen und störanfällig. Weiterhin besteht ein solches Fahrpedal aus sehr vielen Bauteilen, die aufwendig zu fertigen und zu montieren sind.

Aus DE 195 36 605 A1 ist ein Fahrpedalmodul gemäß dem Oberbegriff des Anspruchs 1 mit Blatt-Rückstellfeder bekannt. Die Blattfeder liegt mit einem freien Ende am Pedalarm an, ist aber so eingebaut, daß sich ihr freies, am Pedalarm anliegendes Ende nicht oder nur unwesentlich gegenüber diesem verschiebt. Es ist ein separater Reibungsdämpfer vorgesehen.

Der Erfindung liegt das Problem zugrunde, ein Fahrpedal der vorstehend genannten Art noch weiter zu vereinfachen.

Dieses Problem wird erfindungsgemäß dadurch gelöst, daß beim Bewegen des Pedalarms im Bereich des gleitenden Kontakts eine definierte Relativbewegung gegenüber der Rückstelleinrichtung auftritt. Mit dieser Gestaltung wird die notwendige Dämpfung der Bewegung des Pedalarms durch Gleiten der Rückstelleinrichtung auf dem Pedalarm erzeugt. Damit benötigt das erfindungsgemäße Fahrpedal kein zusätzliches Dämpfungsglied mehr. Die Rückstelleinrichtung könnte beispielsweise eine mit einem Ende in dem Halteteil eingespannte Blattfeder sein. Das erfindungsgemäße Fahrpedal besteht damit aus besonders wenigen Bauteilen, die sich besonders einfach und kostengünstig montieren lassen. Das Fahrpedal kann zudem wahlweise hängend oder stehend im Kraftfahrzeug befestigt werden.

Der Sollwertgeber des bekannten Fahrpedals hat in der Regel einen in dem Gelenk des Pedalarms angeordneten Drehpotentiometer. Man könnte daran denken, den Sollwertgeber des erfindungsgemäßen Fahrpedals wie den des bekannten Fahrpedals zu gestalten. Hierdurch wirken sich jedoch Toleranzen der Lagerung des Pedalarms unmittelbar auf den Sollwertgeber aus, so daß eine exakte Bestimmung der Position des Pedalarms nicht möglich ist. Der Sollwertgeber ermöglicht jedoch gemäß einer vorteilhaften Weiterbildung der Erfindung eine besonders zuverlässige Bestimmung der Position des Pedalarms, wenn er zur Erfassung der Relativbewegung zwischen dem Pedalarm und dem an dem Pedalarm gleitend anliegenden Bereich der Rückstelleinrichtung ausgebildet ist. Durch diese Gestaltung kann der Pedalarm zudem wahlweise wie bei dem bekannten Fahrpedal an einem Gelenk schwenkbar gelagert oder jedoch selbst als weitere Blattfeder ausgebildet und in dem Halteteil befestigt sein.

Eine vorgesehene Dämpfung der Bewegung des Pedalarms läßt sich gemäß einer anderen vorteilhaften Weiterbildung der Erfindung einfach dadurch erzeugen, daß der Pedalarm in seinem an der Rückstelleinrichtung anliegenden Bereich einen Reibbelag aufweist. Durch eine geeignete Wahl des Reibbelag-Materials mit richtungsabhängig unterschiedlichem Reibkoeffizienten läßt sich zudem sehr einfach eine Hysterese erzeugen, durch die das Niederdrücken des Pedalarms stärker gedämpft wird als das Zurückbewegen in die Grundstellung.

Das erfindungsgemäße Fahrpedal gestaltet sich konstruktiv besonders einfach, wenn die Rückstelleinrichtung zur Betätigung eines auf dem Pedalarm angeordneten Potentiometers des Sollwertgebers ausgebildet ist. Ein weiterer Vorteil dieser Gestaltung besteht darin, daß eine Schleifbahn des Potentiometers besonders große Abmessungen aufweisen kann, so daß sich die Position des Pedalarms besonders exakt bestimmen läßt. Wird zur Redundanz ein Potentiometer mit mehreren Schleifbahnen eingesetzt, haben diese dieselbe Länge, so daß Meßfehler besonders gering gehalten werden. Anstelle eines Potentiometers kann man auch berührungslos wirkende Rückmeldesysteme, z. B. kapazitive oder induktive Wegaufnehmer, verwenden, die weniger verschleißanfällig, jedoch teurer sind.

Der Pedalarm wird gemäß einer anderen vorteilhaften Weiterbildung der Erfindung besonders zuverlässig in die Grundstellung zurückgeschwenkt, wenn das Federelement der Rückstelleinrichtung zwei in dem Halteteil eingespannte Blattfedern aufweist. Die Befestigung der Federelemente in dem Halteteil trägt zudem zur weiteren Verringerung der Fertigungskosten des erfindungsgemäßen Fahrpedals bei. Anstelle von Blattfedem können selbstverständlich auch zwei Drehfedern eingesetzt werden, die einen Betätigungshebel gegen den Pedalarm vorspannen.

Der Pedalarm hat gemäß einer anderen vorteilhaften Weiterbildung der Erfindung eine besonders hohe Stabilität, wenn er einen U-förmigen Querschnitt hat.

Die seitliche Führung der Rückstelleinrichtung gegenüber dem Pedalarm gestaltet sich gemäß einer anderen vorteilhaften Weiterbildung der Erfindung ohne zusätzlich zu montierende Führungselemente besonders kostengünstig, wenn der am Pedalarm anliegende Bereich der Rückstelleinrichtung ebenfalls U-förmigen Querschnitt hat und mit dem U-förmigen Bereich des Pedalarms ineinander geschachtelt ist.

Bei dem U-förmig gestalteten Pedalarm kann man das Dämpfungsglied mit sehr großen Abmessungen versehen, wenn das Dämpfungsglied an der Rückstelleinrichtung befestigte, gegen die Schenkel des U-förmigen Bereichs des Pedalarms vorgespannte Federelemente aufweist. Ein weiterer Vorteil dieser Gestaltung besteht darin, daß sich die Kräfte der Federelemente an einander gegenüberliegenden Seiten der Rückstelleinrichtung abstützen. Hierdurch läßt sich eine vorgesehene Reibung besonders einfach einstellen.

Der Sollwertgeber gestaltet sich gemäß einer anderen vorteilhaften Weiterbildung der Erfindung besonders kostengünstig, wenn in der Basis des Pedalarms eine Schleifbahn des Potentiometers des Sollwertgebers angeordnet ist und wenn die Rückstelleinrichtung einen gegen die Schleifbahn vorgespannten Schleifkontakt hat.

Ein Abheben des Pedalarms von der Rückstelleinrichtung läßt sich gemäß einer anderen vorteilhaften Weiterbildung der Erfindung einfach vermeiden, wenn der Pedalarm oder die Rückstelleinrichtung in den Schenkeln jeweils eine Nut und das andere Bauteil in die Nuten eingreifende Zapfen aufweist. Hierdurch ist der Pedalarm gegenüber der Rückstelleinrichtung besonders zuverlässig geführt.

Der Sollwertgeber weist gemäß einer anderen vorteilhaften Weiterbildung der Erfindung eine besonders hohe Lebensdauer auf, wenn die Schleifbahn des Potentiometers ein Keramiksubstrat als Trägermaterial aufweist.

Die Kosten für die Fertigung des erfindungsgemäßen Fahrpedals lassen sich einfach durch eine Leitplastik auf der Oberseite der Schleifbahn des Potentiometers verringern.

Bei Kraftfahrzeugen mit Automatikgetriebe signalisiert bei fast durchgetretenem Fahrpedal ein erhöhter Widerstand dem Fahrer die sogenannte Kick-Down-Schwelle. Wird das Fahrpedal über diese hinweg getreten, so schaltet das Automatikgetriebe in der Regel zwecks erhöhter Beschleunigung zurück. Die Kick-Down-Schwelle läßt sich bei dem erfindungsgemäßen Fahrpedal einfach dadurch erzeugen, daß der Pedalarm eine gegen die Rückstelleinrichtung hervorspringende Nase aufweist und daß die Rückstelleinrichtung bei fast durchgetretenem Pedalarm gegen die Nase angleitet. Der vorgesehene Widerstand der Kick-Down-Schwelle läßt sich durch die Formgebung der Nase (Flankensteilheit) einfach einstellen. Der Sollwertgeber könnte dann zur Erzeugung von elektrischen Signalen der Kick-Down-Schwelle beispielsweise ein Schaltelement zur Erzeugung eines elektrischen Signals bei fast durchgetretenem Pedal aufweisen.

Der Pedalarm kann nahe der Pedalplatte unerwünschte Schwingungen ausführen, die nicht auf den Sollwertgeber übertragen werden sollten. Diese Schwingungen werden wirksam gedämpft, wenn der Sollwertgeber zur Erfassung einer Verformung des Federelementes der Rückstelleinrichtung ausgebildet ist.

Der Sollwertgeber ist gemäß einer anderen vorteilhaften Weiterbildung der Erfindung besonders unanfällig gegen Verschmutzungen, wenn der Sollwertgeber einen auf dem Federelement angeordneten Dehnmeßstreifen aufweist.

Das erfindungsgemäße Fahrpedal läßt sich vollständig vormontieren, wenn der Leerlaufanschlag für den Pedalarm am Halteteil vorgesehen ist.

Das Halteteil könnte beispielsweise aus Stahlblech gestanzt sein. Hierdurch hätte das Halteteil eine besonders hohe Stabilität. in einer Leichtbauvariante wird das Halteteil aus Kunststoff im Spritzgießverfahren gefertigt.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Figur 1: einen Längsschnitt durch ein erfindungsgemäßes Fahrpedal,
- Figur 2: eine Schnittdarstellung durch das Fahrpedal aus Figur 1 entlang der Linie II - II,
- Figur 3: eine Schnittdarstellung durch eine weitere Ausführungsform des erfindungsgemäßen Fahrpedals im Bereich eines Sollwertgebers,
- Figur 4: eine weitere Ausführungsform des erfindungsgemäßen Fahrpedals.

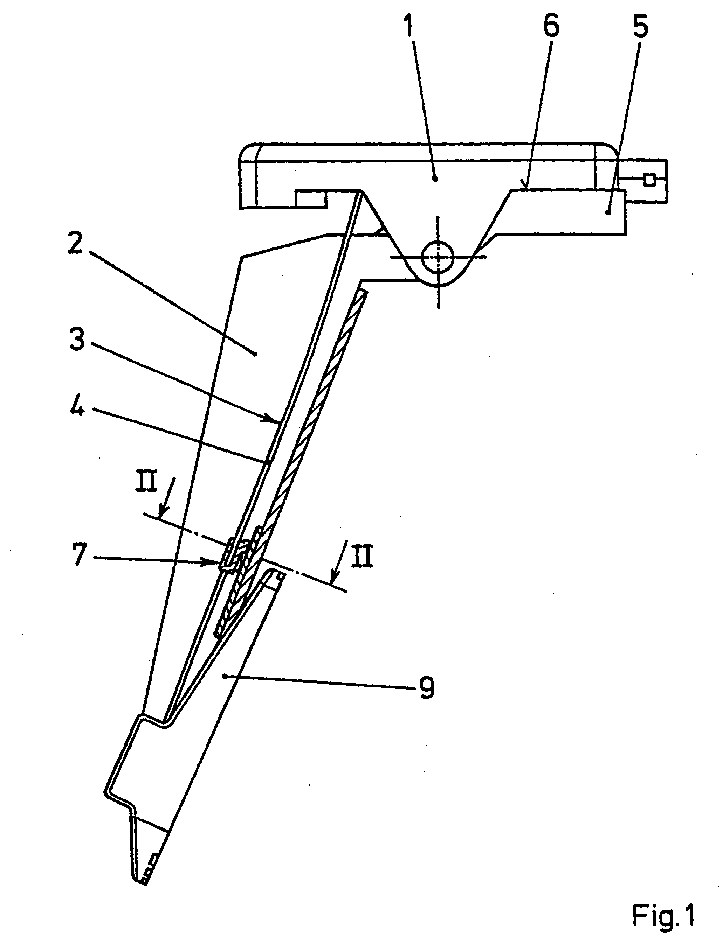

Die Figur 1 zeigt ein erfindungsgemäßes Fahrpedal für ein Kraftfahrzeug mit einem in einem Halteteil 1 schwenkbar gelagerten Pedalarm 2 in hängender Einbaulage. Der Pedalarm 2 ist von einer Rückstelleinrichtung 3 mit einem Federelement 4 in eine Grundstellung vorgespannt, in der ein Hebel 5 des Pedalarms 2 an einem Leerlaufanschlag 6 des Halteteils 1 anliegt. Weiterhin hat das erfindungsgemäße Fahrpedal einen Sollwertgeber 7, der in Abhängigkeit von der Stellung des Pedalarms 2 veränderliche elektrische Signale erzeugt. Der Pedalarm 2 läßt sich durch Druck auf eine Pedalplatte 9 gegen die Kraft des Federelementes 4 auslenken.

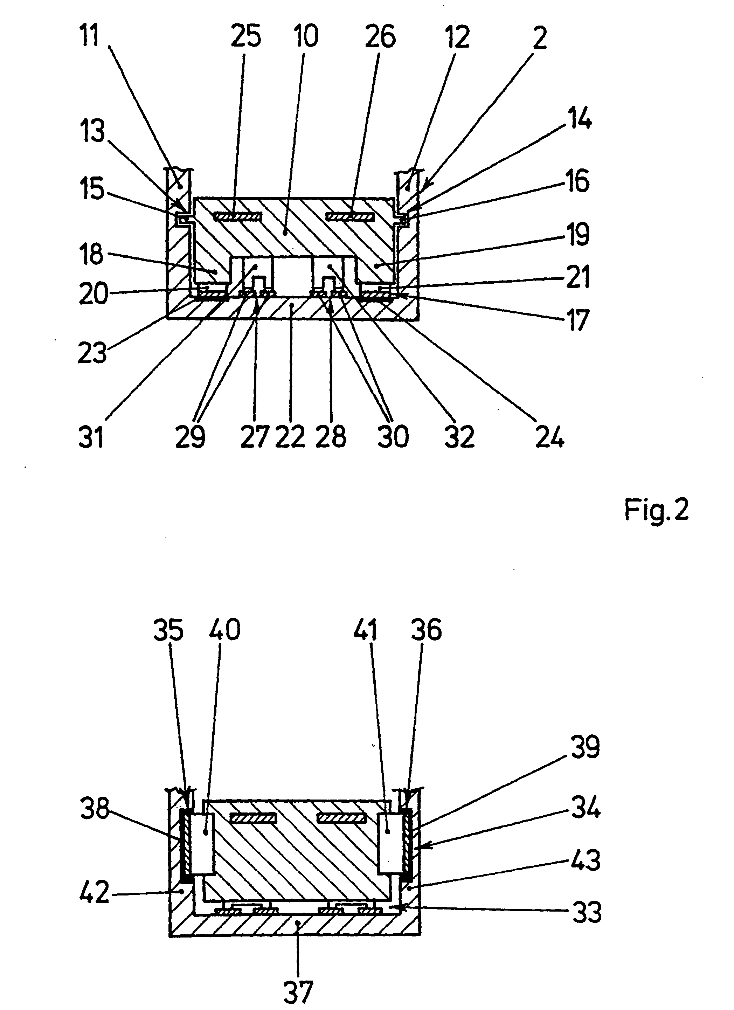

Figur 2 zeigt in einer Schnittdarstellung entlang der Linie II - II durch das erfindungsgemäße Fahrpedal aus Figur 1, daß die Querschnitte des Pedalarm 2 und eines Führungsteils 10 der Rückstelleinrichtung 3 jeweils U-förmig gestaltet sind. in den Schenkeln 11, 12 des Pedalarms 2 sind zur Führung der Rückstelleinrichtung 3 Nuten 13, 14 eingearbeitet, in die Zapfen 15, 16 des Führungsteils 10 der Rückstelleinrichtung 3 eingreifen. Weiterhin hat das erfindungsgemäße Fahrpedal ein Dämpfungsglied 17 mit an den Schenkeln 18, 19 des Führungsteils 10 befestigten Federelementen 20, 21, die gegen auf der Basis 22 des Pedalarms 2 angeordnete Reibbeläge 23, 24 vorgespannt sind. Eine Hysterese des Dämpfungsglieds wird erreicht, indem dessen Reibkraft beim Niederdrücken des Pedalarms 2 mit der Federkraft ansteigt und beim Loslassen entsprechend abfällt. Das Federelement 4 der Rückstelleinrichtung 3 umfasst zwei Blattfedern 25, 26, wodurch der Pedalarm 2 selbst bei einem Bruch einer der Blattfedern 25, 26 zuverlässig in die Grundstellung zurückgeschwenkt wird. Zur Redundanz hat der Sollwertgeber 7 zwei nebeneinander angeordnete Potentiometer 27, 28 mit jeweils zwei Schleifbahnen 29, 30, gegen die auf dem Führungsteil 10 der Rückstelleinrichtung 3 befestigte Schleifkontakte 31, 32 vorgespannt sind.

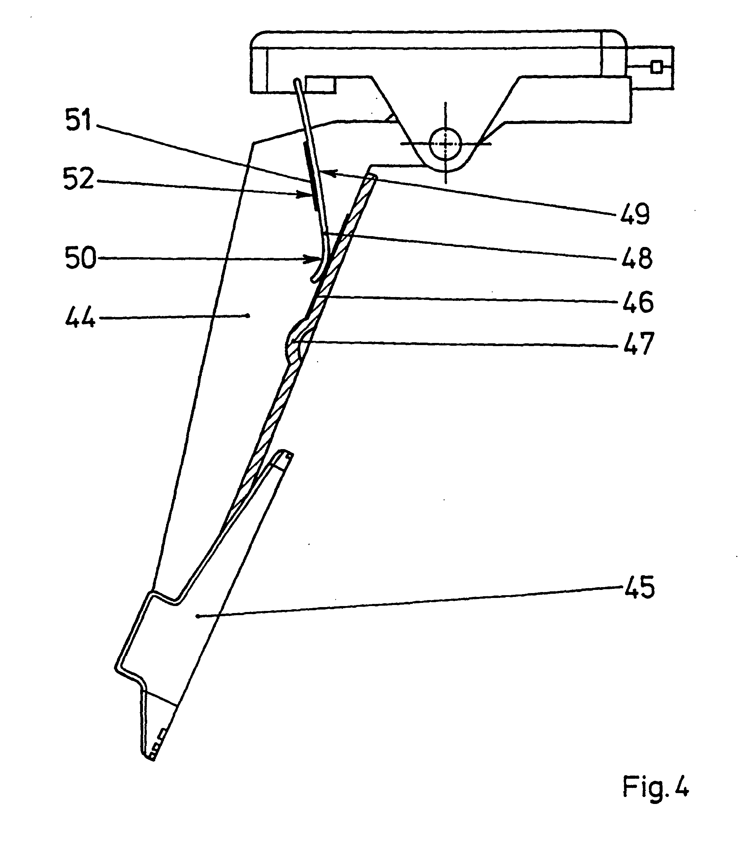

Die Figur 3 zeigt eine Schnittdarstellung durch einen Sollwertgeber 33 und ein Dämpfungsglied 34 einer weiteren Ausführungsform des erfindungsgemäßen Fahrpedals. Das Dämpfungsglied 34 weist zwei in Nuten 35, 36 eines U-förmig gestalteten Pedalarms 37 geführte, gegen Reibbeläge 38, 39 vorgespannte Federelemente 40, 41 auf. Die Nuten 35, 36 sind in den Innenseiten der Schenkel 42, 43 des Pedalarms 37 angeordnet.

Die Figur 4 zeigt eine weitere Ausführungsform des erfindungsgemäßen, für ein Kraftfahrzeug mit Automatikgetriebe vorgesehenen Fahrpedals. Ein Pedalarm 44 des Fahrpedals hat an seiner einer Pedalplatte 45 abgewandten und von einer Nase 47 begrenzten Seite einen Reibbelag 46. Gegen den Reibbelag 46 ist ein Federelement 48 einer Rückstelleinrichtung 49 vorgespannt. Die Rückstelleinrichtung 49 ist damit einteilig mit einem Dämpfungsglied 50 gestaltet, das die Bewegung des Pedalarms 44 dämpft. Bei fast durchgetretenem Pedalarm 44 gelangt das Federelement 48 gegen die Nase 47, was sich für einen Fahrer des Kraftfahrzeuges als erhöhter Widerstand bemerkbar macht. Durch die Form der Nase 47 läßt sich der Widerstand nahezu beliebig einstellen. Auf dem Federelement 48 ist ein Dehnmeßstreifen 51 als Sollwertgeber 52 angeordnet. Der Dehnmeßstreifen 51 erzeugt in Abhängigkeit von der Verformung des Federelementes 48 veränderliche elektrische Signale.

In einer nicht gezeigten Variante dieses Fahrpedals könnte man anstelle des Potentiometers parallel zu und im Bereich der Reibungsdämpfung zwischen Rückstellfeder und Pedalarm berührungslos wirkende Wegaufnehmer vorsehen, die weniger verschleißanfällig sind.

## Patentansprüche

1. Fahrpedal mit einem von einem Halteteil (1) gehaltenem Pedalarm (2, 37, 44), welcher von einer Betätigungskraft auslenkbar und von einer ein Federelement aufweisenden Rückstelleinrichtung (3) selbsttätig in eine Grundstellung zurückschwenkbar ist, mit einem Sollwertgeber (7) zum Erzeugen eines abhängig von der Stellung des Pedalarms (2, 37, 44) veränderlichen elektrischen Signales und mit einem Dämpfungsglied zum Dämpfen von Bewegungen des Pedalarms (2, 37, 44), wobei die Rückstelleinrichtung (3) in gleitendem Kontakt mit dem Pedalarm (2, 37, 44) steht, **dadurch gekennzeichnet, daß** die Dämpfung der Bewegungen des Pedalarms (2, 37, 44) im Bereich des gleitenden Kontaktes durch eine definierte Relativbewegung des Pedalarms (2, 37, 44) gegenüber der Rückstelleinrichtung (3) erzeugt wird.

2. Fahrpedal nach Anspruch 1, **dadurch gekennzeichnet, daß** der Pedalarm (2, 37, 44) in dem Bereich des gleitenden Kontakts einen Reibbelag (23, 24, 38, 39, 46) aufweist.

3. Fahrpedal nach Anspruch 1 oder 2, **dadurch gekennzeichnet, daß** der Reibbelag (23, 24, 38, 39, 46) aus einem Material mit richtungsabhängig unterschiedlichem Reibkoeffizienten besteht.

4. Fahrpedal nach einem der vorstehenden Ansprüche, **dadurch gekennzeichnet, daß** der Sollwertgeber (7, 33) zum Erfassen der Relativbewegung zwischen dem Pedalarm (2, 37) und dem daran anliegenden Bereich der Rückstelleinrichtung (3) ausgebildet ist.

5. Fahrpedal nach einem der vorstehenden Ansprüche, **dadurch gekennzeichnet, daß** die Rückstelleinrichtung (3) zum Betätigen eines auf dem Pedalarm (2) angeordneten Potentiometers (27, 28) des Sollwertgebers (7) ausgebildet ist.

6. Fahrpedal nach Anspruch 5, **dadurch gekennzeichnet, daß** in der Basis (22) des Pedalarms (2) eine Schleifbahn (29, 30) des Potentiometers (27, 28) des Sollwertgebers (7) angeordnet ist und daß die Rückstelleinrichtung (3) einen gegen die Schleifbahn (29, 30) vorgespannten Schleifkontakt (31, 32) hat.

7. Fahrpedal nach Anspruch 5 oder 6, **dadurch gekennzeichnet, daß** die Schleifbahn (29, 30) des Potentiometers (27, 28) ein Keramiksubstrat als Trägermaterial aufweist.

8. Fahrpedal nach Anspruch 5, 6 oder 7, **gekennzeichnet durch** eine Leitplastik auf der Oberseite der Schleifbahn (29, 30) des Potentiometers (27, 28).

9. Fahrpedal nach zumindest einem der vorhergehenden Ansprüche, **dadurch gekennzeichnet, daß** das Federelement (4) der Rückstelleinrichtung (3) zwei in dem Halteteil (1) eingespannte Blattfedem (25, 26) aufweist.

10. Fahrpedal nach zumindest einem der vorhergehenden Ansprüche, **dadurch gekennzeichnet, daß** der Pedalarm (2, 44) im Querschnitt U-förmig gestaltet ist.

11. Fahrpedal nach Anspruch 10, **dadurch gekennzeichnet, daß** die Rückstelleinrichtung (3) in ihrem am Pedalarm (2) anliegenden Bereich U-förmig gestaltet ist und in den U-förmigen Bereich des Pedalarms (2) eingreift.

12. Fahrpedal nach Anspruch 10 oder 11, **dadurch gekennzeichnet, daß** das Dämpfungsglied (34) an der Rückstelleinrichtung befestigte, gegen die Schenkel (42, 43) des U-förmigen Bereichs des Pedalarms (37) vorgespannte Federelemente (40, 41) aufweist.

13. Fahrpedal nach zumindest einem der vorhergehenden Ansprüche, **dadurch gekennzeichnet, daß** der Pedalarm (2) oder die Rückstelleinrichtung (3) in den Schenkeln (11, 12) jeweils eine Nut (13, 14) und das jeweils andere Bauteil (Pedalarm 2 oder Rückstelleinrichtung 3) in die Nuten (13, 14) eingreifende Zapfen (15, 16) aufweist.

14. Fahrpedal nach zumindest einem der vorhergehenden Ansprüche, **dadurch gekennzeichnet, daß** der Pedalarm (44) eine zur Rückstelleinrichtung hin hervorspringende Nase (47) als überdrückbare Kick-Down-Schwelle aufweist, gegen die die Rückstelleinrichtung (49) bei fast durchgetretenem Pedalarm (44) anläuft.

15. Fahrpedal nach zumindest einem der vorhergehenden Ansprüche, **dadurch gekennzeichnet, daß** der Sollwertgeber (52) zum Erfassen einer Verformung des Federelementes (48) der Rückstelleinrichtung (49) ausgebildet ist.

16. Fahrpedal nach zumindest einem der vorhergehenden Ansprüche, **dadurch gekennzeichnet, daß** der Sollwertgeber (52) einen auf dem Federelement (48) angeordneten Dehnmeßstreifen (51) umfaßt.

17. Fahrpedal nach einem der Ansprüche 1 bis 5, **dadurch gekennzeichnet, daß** zum Erfassen der gleitenden Relativbewegung zwischen dem Pedalarm und der Rückstelleinrichtung ein berührungslos, insbesondere kapazitiv oder induktiv wirkender Wegaufnehmer des Sollwertgebers vorgesehen ist.

18. Fahrpedal nach zumindest einem der vorhergehenden Ansprüche, **dadurch gekennzeichnet, daß** das Halteteil (1) einen Leeriaufanschlag (6) für den Pedalarm (2) aufweist.

19. Fahrpedal nach zumindest einem der vorhergehenden Ansprüche, **dadurch gekennzeichnet, daß** das Halteteil (1) aus Kunststoff im Spritzgießverfahren gefertigt ist.

## Claims

1. Accelerator pedal having a pedal arm (2, 37, 44), which is held by a holding part (1), can be deflected by an actuating force and can automatically be pivoted back into an initial position by a restoring device (3) having a spring element, having a desired value transmitter (7) for generating an electrical signal which is variable depending on the position of the pedal arm (2, 37, 44), and having a damping member for damping movements of the pedal arm (2, 37, 44), the restoring device (3) being in sliding contact with the pedal arm (2, 37, 44),
**characterized in that** the damping of the movements of the pedal arm (2, 37, 44) in the region of the sliding contact is produced by a defined relative movement of the pedal arm (2, 37, 44) with respect to the restoring device (3).

2. Accelerator pedal according to Claim 1,
**characterized in that** the pedal arm (2, 37, 44) has a friction lining (23, 24, 38, 39, 46) in the region of the sliding contact.

3. Accelerator pedal according to Claim 1 or 2,
**characterized in that** the friction lining (23, 24, 38, 39, 46) is composed of a material having a coefficient of friction which varies depending on direction.

4. Accelerator pedal according to one of the preceding claims, **characterized in that** the desired value transmitter (7, 33) is designed to detect the relative movement between the pedal arm (2, 37) and that region of the restoring device (3) which bears on the said pedal arm.

5. Accelerator pedal according to one of the preceding claims, **characterized in that** the restoring device (3) is designed to actuate a potentiometer (27, 28) of the desired value transmitter (7), which potentiometer is arranged on the pedal arm (2).

6. Accelerator pedal according to Claim 5, **characterized in that** a sliding track (29, 30) of the potentiometer (27, 28) of the desired value transmitter (7) is arranged in the base (22) of the pedal arm (2), and **in that** the restoring device (3) has a sliding-action contact (31, 32) which is prestressed relative to the sliding track (29, 30).

7. Accelerator pedal according to Claim 5 or 6, **characterized in that** the sliding track (29, 30) of the potentiometer (27, 28) has a ceramic substrate as carrier material.

8. Accelerator pedal according to Claim 5, 6 or 7, **characterized by** a conductive plastic on the top side of the sliding track (29, 30) of the potentiometer (27, 28).

9. Accelerator pedal according to at least one of the preceding claims, **characterized in that** the spring element (4) of the restoring device (3) has two leaf springs (25, 26) clamped into the holding part (1).

10. Accelerator pedal according to at least one of the preceding claims, **characterized in that** the pedal arm (2, 44) has a cross-sectionally U-shaped configuration.

11. Accelerator pedal according to Claim 10, **characterized in that** the restoring device (3) has a U-shaped configuration in its region bearing on the pedal arm (2) and engages in the U-shaped region of the pedal arm (2).

12. Accelerator pedal according to Claim 10 or 11, **characterized in that** the damping member (34) has spring elements (40, 41), which are fastened on the restoring device and are prestressed relative to the limbs (42, 43) of the U-shaped region of the pedal arm (37).

13. Accelerator pedal according to at least one of the preceding claims, **characterized in that** the pedal arm (2) or the restoring device (3) has a respective groove (13, 14) in the limbs (11, 12) and the respective other component (pedal arm 2 or restoring device 3) has pegs (15, 16) engaging in the grooves (13, 14).

14. Accelerator pedal according to at least one of the preceding claims, **characterized in that** the pedal arm (44) has a lug (47), which protrudes towards the restoring device, as kick-down threshold which can be surmounted and which the restoring device (49) runs up against when the pedal arm (44) is pressed almost to the floor.

15. Accelerator pedal according to at least one of the preceding claims, **characterized in that** the desired value transmitter (52) is designed to detect a deformation of the spring element (48) of the restoring device (49).

16. Accelerator pedal according to at least one of the preceding claims, **characterized in that** the desired value transmitter (52) comprises a strain gauge (51) arranged on the spring element (48).

17. Accelerator pedal according to one of Claims 1 to 5, **characterized in that** a displacement pick-up, having a contactless, in particular capacitive or inductive, action, of the desired value transmitter is provided for the purpose of detecting the sliding relative movement between the pedal arm and the restoring device.

18. Accelerator pedal according to at least one of the preceding claims, **characterized in that** the holding part (1) has an idling stop (6) for the pedal arm (2).

19. Accelerator pedal according to at least one of the preceding claims, **characterized in that** the holding part (1) is produced from plastic in an injection-moulding process.

## Revendications

1. Pédale d'accélérateur présentant un bras de pédale (2, 37, 44) maintenu par une pièce de retenue (1) et apte à être pivoté par une force d'actionnement et à être ramené automatiquement dans une position de base par un dispositif de rappel (3) présentant un élément à ressort, un émetteur de valeurs de consigne (7) pour créer un signal électrique qui varie en fonction de la position du bras de pédale (2, 37, 44), un organe d'amortissement pour amortir des déplacements du bras de pédale (2, 37, 44), le dispositif de rappel (3) étant en contact coulissant avec le bras de pédale (2, 37, 44), **caractérisé en ce que** l'amortissement des déplacements du bras de pédale (2, 37, 44) dans la région du contact coulissant est créé par un déplacement relatif défini du bras de pédale (2, 37, 44) par rapport au dispositif de rappel (3).

2. Pédale d'accélérateur selon la revendication 1, **caractérisée en ce que** le bras de pédale (2, 37, 44) présente une garniture de frottement (23, 24, 38, 39, 46) dans la région du contact coulissant.

3. Pédale d'accélérateur selon la revendication 1 ou 2, **caractérisé en ce que** la garniture de frottement (23, 24, 38, 39, 46) est constituée d'un matériau présentant des coefficients de frottement différents en fonction de la direction.

4. Pédale d'accélérateur selon l'une des revendications précédentes, **caractérisé en ce que** l'émetteur de valeurs de consigne (7, 33) est configuré pour détecter le déplacement relatif entre le bras de pédale (2, 37) et la région du dispositif de rappel (3) disposée contre ce bras de pédale.

5. Pédale d'accélérateur selon l'une des revendications précédentes, **caractérisé en ce que** le dispositif de rappel (3) est configuré pour actionner un potentiomètre (27, 28), disposé sur le bras de pédale (2), de l'émetteur de valeurs de consigne (7).

6. Pédale d'accélérateur selon la revendication 5, **caractérisé en ce qu'**une piste de coulissement (29, 30) du potentiomètre (27, 28) de l'émetteur de valeurs de consigne (7) est disposée à la base (22) du bras de pédale (2), et **en ce que** le dispositif de rappel (3) présente un contact coulissant (31, 32) précontraint contre la piste de coulissement (29, 30).

7. Pédale d'accélérateur selon la revendication 5 ou 6, **caractérisé en ce que** la piste de coulissement (29, 30) du potentiomètre (27, 28) présente un substrat en céramique comme matériau de support.

8. Pédale d'accélérateur selon la revendication 5, 6 ou 7, **caractérisé par** un guide en plastique sur le côté supérieur de la piste de coulissement (29, 30) du potentiomètre (27, 28).

9. Pédale d'accélérateur selon au moins l'une des revendications précédentes, **caractérisé en ce que** l'élément à ressort (4) du dispositif de rappel (3) présente deux lames de ressort (25, 26) serrées dans la pièce de retenue (1).

10. Pédale d'accélérateur selon au moins l'une des revendications précédentes, **caractérisé en ce que** le bras de pédale (2, 44) présente en section transversale la forme d'un U.

11. Pédale d'accélérateur selon la revendication 10, **caractérisée en ce que** dans sa région adjacente au bras de pédale (2), le dispositif de rappel (3) est configuré en forme de U et s'engage dans la région en forme de U du bras de pédale (2).

12. Pédale d'accélérateur selon la revendication 10 ou 11, **caractérisée en ce que** l'organe d'amortissement (34) présente des éléments à ressort (40, 41) fixés sur le dispositif de rappel et précontraints contre les ailes (42, 43) de la région en forme de U du bras de pédale (37).

13. Pédale d'accélérateur selon au moins l'une des revendications précédentes, **caractérisée en ce que** le bras de pédale (2) ou le dispositif de rappel (3) présentent dans les ailes (11, 12) chaque fois une rainure (13, 14), et l'autre composant (bras de pédale 2 ou dispositif de rappel 3) présente des tourillons (15, 16) s'engageant dans les rainures (13, 14).

14. Pédale d'accélérateur selon au moins l'une des revendications précédentes, **caractérisée en ce que** le bras de pédale (44) présente un bec (47) qui déborde en direction du dispositif de rappel, comme seuil d'enfoncement d'accélération, contre lequel le dispositif de rappel (49) vient se placer lorsque le bras de pédale (44) a parcouru presque toute sa course.

15. Pédale d'accélérateur selon au moins l'une des revendications précédentes, **caractérisée en ce que** l'émetteur de valeurs de consigne (52) est configuré pour détecter une déformation de l'élément à ressort (48) du dispositif de rappel (49).

16. Pédale d'accélérateur selon au moins l'une des revendications précédentes, **caractérisée en ce que** l'émetteur de valeurs de consigne (52) comprend une bande de mesure d'allongement (51) disposée sur l'élément à ressort (48).

17. Pédale d'accélérateur selon l'une des revendications 1 à 5, **caractérisée en ce que** pour la détection du déplacement relatif de coulissement entre le bras de pédale et le dispositif de rappel, il est prévu un enregistreur de déplacement de l'émetteur de valeurs de consigne, sans contact, travaillant en particulier capacitivement ou inductivement.

18. Pédale d'accélérateur selon au moins l'une des revendications précédentes, **caractérisée en ce que** la pièce de maintien (1) présente une butée (6) de course à vide pour le bras de pédale (2).

19. Pédale d'accélérateur selon au moins l'une des revendications précédentes, **caractérisée en ce que** la pièce de maintien (1) est réalisée en plastique par un procédé de moulage par injection.
